# EUROPEAN PATENT APPLICATION

(11) **EP 3 790 156 A1**
(43) Date of publication of application: **10.03.2021**
(21) Application number: 20194467.5
(22) Date of filing: 03.09.2020
(51) Int. Cl.: H02J 9/06, H02M 7/219

(54) **A MULTI-INPUT POWER CONVERTER, A CONTROLLING METHOD THEREOF AND AN UNINTERRUPTED POWER SUPPLY INCLUDING THE SAME**

(30) Priority: 03.09.2019 CN 201910826856
(71) Applicant: Santak Electronic (Shenzhen) Co., Ltd., Guangdong 518101 (CN)
(72) Inventor: CAO, Lei, Shenzhen 518101 (CN)
(74) Representative: Wagner & Geyer

(57) **Abstract**

The present invention provides a multi-input power converter, a control method thereof, and an uninterruptible power supply comprising the same. The multi-input power converter comprises: n bridge arms connected in parallel between a positive direct current (DC) bus and a negative DC bus, where n is a positive integer not less than 3; a capacitor assembly connected between the positive DC bus and the negative DC bus; an alternating current (AC) switch assembly connected between input ends of the first bridge arm to the n-1^{th} bridge arm and alternating currents; and a DC switch assembly connected between input ends of the second bridge arm to the n^{th} bridge arm and a positive electrode of a rechargeable battery. The multi-input power converter of the present invention can realize bidirectional flow of energy and soft power switching with low costs.

## Description

### TECHNICAL FIELD

The present invention relates to a power converter, in particular to a multi-input power converter, a control method thereof, and an uninterruptible power supply including the same.

### BACKGROUND

An uninterruptible power supply can continuously supply power to a load. When a mains voltage is normal, the mains supplies power to the load; when the mains voltage is abnormal or the power is out, a rechargeable battery supplies power to the load. Currently, the uninterruptible power supply has been widely applied in various fields.

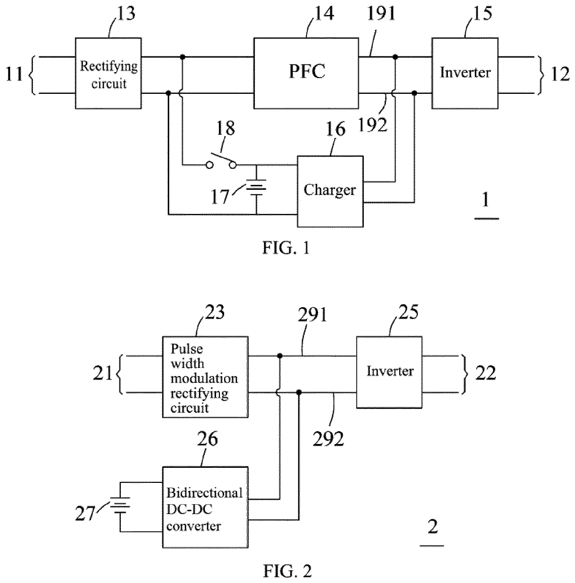

FIG. 1 is a circuit block diagram of a first uninterruptible power supply in the prior art. As shown in FIG. 1, an uninterruptible power supply 1 includes a rectifying circuit 13, a power factor correction circuit (PFC) 14, and an inverter 15 connected in sequence between an alternating current (AC) input end 11 and an AC output end 12; and a charger 16, a rechargeable battery 17, and a switch device 18. An input end of the rectifying circuit 13 is connected to or used as the AC input end 11, and an output end thereof is connected to an input end of the PFC 14. An output end of the PFC 14 is connected to a positive direct current (DC) bus 191 and a negative DC bus 192. An input end of the inverter 15 is connected to the positive DC bus 191 and the negative DC bus 192, and an output end thereof is connected to or used as the AC output end 12. An input end of the charger 16 is connected to the positive DC bus 191 and the negative DC bus 192, and an output end thereof is connected to two ends of the rechargeable battery 17. The rechargeable battery 17 is connected to the input end of the PFC 14 via the switch device 18.

The AC or mains power at the AC input end 11 in the uninterruptible power supply 1 and the rechargeable battery 17 in FIG. 1 cannot simultaneously supply power to a load connected to the AC output end 12, and cannot realize soft power switching, affecting the characteristics of the uninterruptible power supply. Moreover, it is impossible to transmit the electric energy at the AC output end 12 to the AC input end 11, limiting the applicability and functional expansibility of the uninterruptible power supply.

FIG. 2 is a circuit block diagram of a second uninterruptible power supply in the prior art. As shown in FIG. 2, an uninterruptible power supply 2 includes a pulse width modulation rectifying circuit 23, an inverter 25, and a bidirectional DC-DC converter 26. An input end of the pulse width modulation rectifying circuit 23 is connected to or used as an AC input end 21, and an output end thereof is connected to a positive DC bus 291 and a negative DC bus 292. An input end of the inverter 25 is connected to the positive DC bus 291 and the negative DC bus 292, and an output end thereof is connected to or used as an AC output end 22. An input end of the DC-DC converter 26 is connected to two ends of a rechargeable battery 27, and an output end thereof is connected to the positive DC bus 291 and the negative DC bus 292.

The uninterruptible power supply 2 in FIG. 2 can realize bidirectional flow of energy, that is, transmitting the electric energy at the AC output end 22 to an AC output end 21. The pulse width modulation rectifying circuit 23 and the bidirectional DC-DC converter 26 can be simultaneously controlled to supply power to a load connected to the AC output end 22, and is capable of realizing soft power switching. However, the sum of the power of the pulse width modulation rectifying circuit 23 and the bidirectional DC-DC converter 26 is twice the output power, consequently increasing the costs of electronic components.

### Summary

In view of the aforementioned technical problems existing in power converters in the prior art, the present invention provides a multi-input power converter, including:
n bridge arms connected in parallel between a positive direct current (DC) bus and a negative DC bus, where n is a positive integer not less than 3;
a capacitor assembly connected between the positive DC bus and the negative DC bus;
an alternating current (AC) switch assembly connected between input ends of the first bridge arm to the n-1^{th} bridge arm and alternating currents; and a DC switch assembly connected between input ends of the second bridge arm to the n^{th} bridge arm and a positive electrode of a rechargeable battery.

Preferably, the capacitor assembly includes a first capacitor and a second capacitor connected in series between the positive DC bus and the negative DC bus.

Preferably, the multi-input power converter includes a freewheeling switch, one end of the freewheeling switch is connected to the input end of the first bridge arm, and the other end thereof is connected to a node at which the first capacitor and the second capacitor are connected.

Preferably, the alternating currents are three phase alternating currents, the n bridge arms include a first bridge arm, a second bridge arm, a third bridge arm, and a fourth bridge arm, and the AC switch assembly includes:
an AC switch connected between a first phase alternating current of the three phase alternating currents and the input end of the first bridge arm;
an AC switch connected between a second phase alternating current of the three phase alternating currents and the input end of the second bridge arm; and
an AC switch connected between a third phase alternating current of the three phase alternating currents and the input end of the third bridge arm.

Preferably, the DC switch assembly includes:
a DC switch connected between the input end of the second bridge arm and the positive electrode of the rechargeable battery;
a DC switch connected between the input end of the third bridge arm and the positive electrode of the rechargeable battery; and
a DC switch connected between the input end of the fourth bridge arm and the positive electrode of the rechargeable battery.

Preferably, each of the n bridge arms includes:
a first switch transistor and a first diode in anti-parallel connection thereto;
a second switch transistor and a second diode in anti-parallel connection thereto; and
an inductor;
wherein the first switch transistor and the second switch transistor are connected in series between the positive DC bus and the negative DC bus, one end of the inductor is connected to a node at which the first switch transistor and the second switch transistor are connected, and the other end of the inductor is used as the input end.

Preferably, the first switch transistor is a first insulated gate bipolar transistor, the second switch transistor is a second insulated gate bipolar transistor, and a node at which an emitter of the first insulated gate bipolar transistor and a collector of the second insulated gate bipolar transistor are connected is connected to one end of the inductor.

Preferably, the multi-input power converter further includes a control device configured to:
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the first bridge arm to the n-1^{th} bridge arm to operate in a pulse width modulation mode so that the alternating current is converted into a direct current and transmitted to the positive DC bus and the negative DC bus, and control the n^{th} bridge arm to operate in a pulse width modulation mode so as to charge the rechargeable battery in a buck mode; or
control the AC switch assembly and the DC switch assembly so that the input ends of the first bridge arm to the n-1^{th} bridge arm are connected to the alternating currents, control the first bridge arm to the n-1^{th} bridge arm to operate in a pulse width modulation mode so that the alternating current is converted into a direct current and transmitted to the positive DC bus and the negative DC bus, and control the n^{th} bridge arm to stop operating; or
control the AC switch assembly and the DC switch assembly so that the input ends of the second bridge arm to the n^{th} bridge arm are connected to the positive electrode of the rechargeable battery, and control the second bridge arm to the n^{th} bridge arm to operate in a pulse width modulation mode so that the direct current in the rechargeable battery is boosted and then transmitted to the positive DC bus and the negative DC bus; or
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the first bridge arm to the n-1^{th} bridge arm to operate in a pulse width modulation mode so that the alternating current is converted into a direct current and transmitted to the positive DC bus and the negative DC bus, and control the n^{th} bridge arm to operate in a pulse width modulation mode so that the direct current in the rechargeable battery is boosted and transmitted to the positive DC bus and the negative DC bus; or
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the n^{th} bridge arm to operate in a pulse width modulation mode so that the direct current in the rechargeable battery is boosted and then transmitted to the positive DC bus and the negative DC bus, and control the first bridge arm to the n-1^{th} bridge arm to operate in a pulse width modulation mode so that the direct current in the positive DC bus and the negative DC bus is inverted into an alternating current; or
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the first bridge arm to the n-1^{th} bridge arm to operate in a pulse width modulation mode so that the direct current in the positive DC bus and the negative DC bus is inverted into an alternating current, and control the n^{th} bridge arm to operate in a pulse width modulation mode so as to charge the rechargeable battery in a buck mode; or control the AC switch assembly and the DC switch assembly so that the input ends of the first bridge arm to the n-1^{th} bridge arm are connected to the alternating currents, control the first bridge arm to the n-1^{th} bridge arm to operate in a pulse width modulation mode so that the direct current in the positive DC bus and the negative DC bus is inverted into an alternating current, and control the n^{th} bridge arm to stop operating; or
control the AC switch assembly and the DC switch assembly so that the input ends of the second bridge arm to the n^{th} bridge arm are connected to the positive electrode of the rechargeable battery, and control the second bridge arm to the n^{th} bridge arm to operate in a pulse width modulation mode so as to charge the rechargeable battery in a buck mode.

Preferably, the capacitor assembly includes a first capacitor and a second capacitor connected in series between the positive DC bus and the negative DC bus, the multi-input power converter includes a freewheeling switch, one end of the freewheeling switch is connected to the input end of the first bridge arm, and the other end thereof is connected to a node at which the first capacitor and the second capacitor are connected; the control device is used to control the freewheeling switch to be turned on when the input ends of the second bridge arm to the n^{th} bridge arm are controlled to be connected to the positive electrode of the rechargeable battery, and control the freewheeling switch to be turned off when the input ends of the first bridge arm to the n-1^{th} bridge arm are controlled to be connected to the alternating currents.

The present invention further provides a method for controlling the multi-input power converter, including:
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the first bridge arm to the n-1^{th} bridge arm to operate in a pulse width modulation mode so that the alternating current is converted into a direct current and transmitted to the positive DC bus and the negative DC bus, and controlling the n^{th} bridge arm to operate in a pulse width modulation mode so as to charge the rechargeable battery in a buck mode; or
controlling the AC switch assembly and the DC switch assembly so that the input ends of the first bridge arm to the n-1^{th} bridge arm are connected to the alternating currents, controlling the first bridge arm to the n-1^{th} bridge arm to operate in a pulse width modulation mode so that the alternating current is converted into a direct current and transmitted to the positive DC bus and the negative DC bus, and controlling the n^{th} bridge arm to stop operating; or
controlling the AC switch assembly and the DC switch assembly so that the input ends of the second bridge arm to the n^{th} bridge arm are connected to the positive electrode of the rechargeable battery, and controlling the second bridge arm to the n^{th} bridge arm to operate in a pulse width modulation mode so that the direct current in the rechargeable battery is boosted and then transmitted to the positive DC bus and the negative DC bus; or
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the first bridge arm to the n-1^{th} bridge arm to operate in a pulse width modulation mode so that the alternating current is converted into a direct current and transmitted to the positive DC bus and the negative DC bus, and controlling the n^{th} bridge arm to operate in a pulse width modulation mode so that the direct current in the rechargeable battery is boosted and transmitted to the positive DC bus and the negative DC bus; or
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the n^{th} bridge arm to operate in a pulse width modulation mode so that the direct current in the rechargeable battery is boosted and then transmitted to the positive DC bus and the negative DC bus, and controlling the first bridge arm to the n-1^{th} bridge arm to operate in a pulse width modulation mode so that the direct current in the positive DC bus and the negative DC bus is inverted into an alternating current; or
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the first bridge arm to the n-1^{th} bridge arm to operate in a pulse width modulation mode so that the direct current in the positive DC bus and the negative DC bus is inverted into an alternating current, and controlling the n^{th} bridge arm to operate in a pulse width modulation mode so as to charge the rechargeable battery in a buck mode; or
controlling the AC switch assembly and the DC switch assembly so that the input ends of the first bridge arm to the n-1^{th} bridge arm are connected to the alternating currents, controlling the first bridge arm to the n-1^{th} bridge arm to operate in a pulse width modulation mode so that the direct current in the positive DC bus and the negative DC bus is inverted into an alternating current, and controlling the n^{th} bridge arm to stop operating; or
controlling the AC switch assembly and the DC switch assembly so that the input ends of the second bridge arm to the n^{th} bridge arm are connected to the positive electrode of the rechargeable battery, and controlling the second bridge arm to the n^{th} bridge arm to operate in a pulse width modulation mode so as to charge the rechargeable battery in a buck mode.

Preferably, the capacitor assembly includes a first capacitor and a second capacitor connected in series between the positive DC bus and the negative DC bus, the multi-input power converter includes a freewheeling switch, one end of the freewheeling switch is connected to the input end of the first bridge arm, and the other end thereof is connected to a node at which the first capacitor and the second capacitor are connected; the control method includes controlling the freewheeling switch to be turned on when the input ends of the second bridge arm to the n^{th} bridge arm are controlled to be connected to the positive electrode of the rechargeable battery, and controlling the freewheeling switch to be turned off when the input ends of the first bridge arm to the n-1^{th} bridge arm are controlled to be connected to the alternating currents.

Preferably, each of the n bridge arms includes: a first switch transistor and a first diode in anti-parallel connection thereto; a second switch transistor and a second diode in anti-parallel connection thereto; and an inductor, where the first switch transistor and the second switch transistor are connected in series between the positive DC bus and the negative DC bus, one end of the inductor is connected to a node at which the first switch transistor and the second switch transistor are connected, and the other end of the inductor is used as an input end;
wherein the controlling the first bridge arm to the n-1^{th} bridge arm to operate in a pulse width modulation mode so that the alternating current is converted into a direct current includes: providing the first switch transistor and the second switch transistor in each of the first bridge arm to the n-1^{th} bridge arm with two complementary pulse width modulation signals of which duty cycles vary according to the magnitude of the voltage of the corresponding alternating current;
the controlling the n^{th} bridge arm to operate in a pulse width modulation mode to charge the rechargeable battery in a buck mode comprises: controlling the second switch transistor in the n^{th} bridge arm to be cut off, and providing the first switch transistor in the n^{th} bridge arm with a pulse width modulation signal; and
the controlling the second bridge arm to the n^{th} bridge arm to operate in a pulse width modulation mode so that the direct current in the rechargeable battery is boosted and then transmitted to the positive DC bus and the negative DC bus comprises: controlling the first switch transistor in each of the second bridge arm to the n^{th} bridge arm to be cut off, and providing the second switch transistor in each of the second bridge arm to the n^{th} bridge arm with a pulse width modulation signal.

The present invention further provides an uninterruptible power supply, comprising:
the foregoing multi-input power converter;
a rechargeable battery, having a negative electrode connected to a negative DC bus; and
an inverter, having an input end at which a positive terminal and a negative terminal are connected to a positive DC bus and the negative DC bus respectively, and an output end connected to an AC output end.

The multi-input power converter of the present invention uses components having low costs, and can realize bidirectional flow of energy, realize soft power switching, balance voltages on positive and negative DC buses, and realize self-testing of a rechargeable battery.

### BRIEF DESCRIPTION OF THE DRAWINGS

Embodiments of the present invention are further described below with reference to the accompanying drawings:
FIG. 1 is a circuit block diagram of a first uninterruptible power supply in the prior art.
FIG. 2 is a circuit block diagram of a second uninterruptible power supply in the prior art.
FIG. 3 is a circuit diagram of a multi-input power converter connected to three phase alternating currents and a rechargeable battery according to a first embodiment of the present invention.
FIG. 4 is a waveform diagram of pulse width modulation signals provided to a first bridge arm to a third bridge arm in the multi-input power converter shown in FIG. 3.
FIG. 5 is a waveform diagram of a signal provided to a fourth bridge arm in the multi-input power converter shown in FIG. 3.
FIG. 6 is an equivalent circuit diagram of the multi-input power converter shown in FIG. 3 in a first operating mode.
FIG. 7 is an equivalent circuit diagram of the multi-input power converter shown in FIG. 3 in a second operating mode.
FIG. 8 is a waveform diagram of pulse width modulation signals provided to the first bridge arm to a fourth bridge arm in the multi-input power converter shown in FIG. 3.
FIG. 9 is an equivalent circuit diagram of the multi-input power converter shown in FIG. 3 in a third operating mode.
FIG. 10 is an equivalent circuit diagram of the multi-input power converter shown in FIG. 3 in a fourth operating mode.
FIG. 11 is an equivalent circuit diagram of the multi-input power converter shown in FIG. 3 in a fifth operating mode.
FIG. 12 is an equivalent circuit diagram of the multi-input power converter shown in FIG. 3 in a sixth operating mode.
FIG. 13 is an equivalent circuit diagram of the multi-input power converter shown in FIG. 3 in a seventh operating mode.
FIG. 14 is an equivalent circuit diagram of the multi-input power converter shown in FIG. 3 in an eighth operating mode.
FIG. 15 is a circuit diagram of a multi-input power converter connected to alternating currents and a rechargeable battery according to a second embodiment of the present invention.
FIG. 16 is a circuit diagram of a multi-input power converter connected to alternating currents and a rechargeable battery according to a third embodiment of the present invention.

### DETAILED DESCRIPTION OF THE EMBODIMENTS

In order to make the objectives, technical solutions and advantages of the present invention clearer, the present invention is further described in detail below through specific embodiments with reference to the accompanying drawings.

In order to clearly show the circuit diagram of the multi-input power converter of the present invention and its equivalent circuits, the drawings of the present invention do not show a control device for controlling the multi-input power converter.

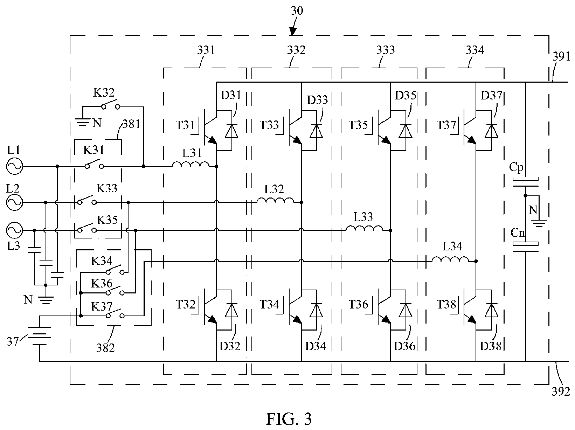

FIG. 3 is a circuit diagram of a multi-input power converter connected to three phase alternating currents and a rechargeable battery according to a first embodiment of the present invention. As shown in FIG. 3, the multi-input power converter 30 includes: a first bridge arm 331, a second bridge arm 332, a third bridge arm 333, and a fourth bridge arm 334 connected in parallel between a positive DC bus 391 and a negative DC bus 392; an AC switch assembly 381 connected between the three phase alternating currents and input ends of the first bridge arm 331, the second bridge arm 332, and the third bridge arm 333; a DC switch assembly 382 connected between a positive electrode of the rechargeable battery 37 and input ends of the second bridge arm 332, the third bridge arm 333, and the fourth bridge arm 334; a freewheeling switch K32 having one end connected to the input end of the first bridge arm 331 and the other end connected to a neutral point N; and a capacitor Cp and a capacitor Cn connected in series between the positive DC bus 391 and the negative DC bus 392, a node at which the capacitor Cp and the capacitor Cn are connected being the neutral point N.

The first bridge arm 331 includes an insulated gate bipolar transistor T31 having an anti-parallel connected diode D31, an insulated gate bipolar transistor T32 having an anti-parallel connected diode D32, and an inductor L31. The insulated gate bipolar transistors T31 and T32 are connected in series between the positive DC bus 391 and the negative DC bus 392, that is, a collector of the insulated gate bipolar transistor T31 is connected to the positive DC bus 391, an emitter of the insulated gate bipolar transistor T32 is connected to the negative DC bus 392, and an emitter of the insulated gate bipolar transistor T31 is connected to a collector of the insulated gate bipolar transistor T32. One end of the inductor L31 is connected to a node at which the insulated gate bipolar transistors T31 and T32 are connected, and the other end is used as the input end of the first bridge arm 331.

The second bridge arm 332 includes an insulated gate bipolar transistor T33 having an anti-parallel connected diode D33, an insulated gate bipolar transistor T34 having an anti-parallel connected diode D34, and an inductor L32. The insulated gate bipolar transistors T33 and T34 are connected in series between the positive DC bus 391 and the negative DC bus 392, that is, a collector of the insulated gate bipolar transistor T33 is connected to the positive DC bus 391, an emitter of the insulated gate bipolar transistor T34 is connected to the negative DC bus 392, and an emitter of the insulated gate bipolar transistor T33 is connected to a collector of the insulated gate bipolar transistor T34. One end of the inductor L32 is connected to a node at which the insulated gate bipolar transistors T33 and T34 are connected, and the other end is used as the input end of the second bridge arm 332.

The third bridge arm 333 includes an insulated gate bipolar transistor T35 having an anti-parallel connected diode D35, an insulated gate bipolar transistor T36 having an anti-parallel connected diode D36, and an inductor L33. The insulated gate bipolar transistors T35 and T36 are connected in series between the positive DC bus 391 and the negative DC bus 392, that is, a collector of the insulated gate bipolar transistor T35 is connected to the positive DC bus 391, an emitter of the insulated gate bipolar transistor T36 is connected to the negative DC bus 392, and an emitter of the insulated gate bipolar transistor T35 is connected to a collector of the insulated gate bipolar transistor T36. One end of the inductor L33 is connected to a node at which the insulated gate bipolar transistors T35 and T36 are connected, and the other end is used as the input end of the third bridge arm 333.

The fourth bridge arm 334 includes an insulated gate bipolar transistor T37 having an anti-parallel connected diode D37, an insulated gate bipolar transistor T38 having an anti-parallel connected diode D38, and an inductor L34. The insulated gate bipolar transistors T37 and T38 are connected in series between the positive DC bus 391 and the negative DC bus 392, that is, a collector of the insulated gate bipolar transistor T37 is connected to the positive DC bus 391, an emitter of the insulated gate bipolar transistor T38 is connected to the negative DC bus 392, and an emitter of the insulated gate bipolar transistor T37 is connected to a collector of the insulated gate bipolar transistor T38. One end of the inductor L34 is connected to a node at which the insulated gate bipolar transistors T37 and T38 are connected, and the other end is used as the input end of the fourth bridge arm 334.

The AC switch assembly 381 includes an AC switch K31 connected between a first phase alternating current L1 and the input end of the first bridge arm 331, an AC switch K33 connected between a second phase alternating current L2 and the input end of the second bridge arm 332, and an AC switch K35 connected between a third phase alternating current L3 and the input end of the third bridge arm 333.

The DC switch assembly 382 includes a DC switch K34 connected between the input end of the second bridge arm 332 and the positive electrode of the rechargeable battery 37, a DC switch K36 connected between the input end of the third bridge arm 333 and the positive electrode of the rechargeable battery 37, and a DC switch K37 connected between the input end of the fourth bridge arm 334 and the positive electrode of the rechargeable battery 37.

The operating modes and functions of the multi-input power converter 30 of FIG. 3 are described below respectively.

### First operating mode

When the three phase alternating currents L1, L2, and L3 are normal, and the rechargeable battery 37 is not fully charged, the freewheeling switch K32 is controlled to be turned off, the AC switches K31, K33, and K35 are controlled to be turned on, the DC switches K34 and K36 are controlled to be turned off, and the DC switch K37 is controlled to be turned on.

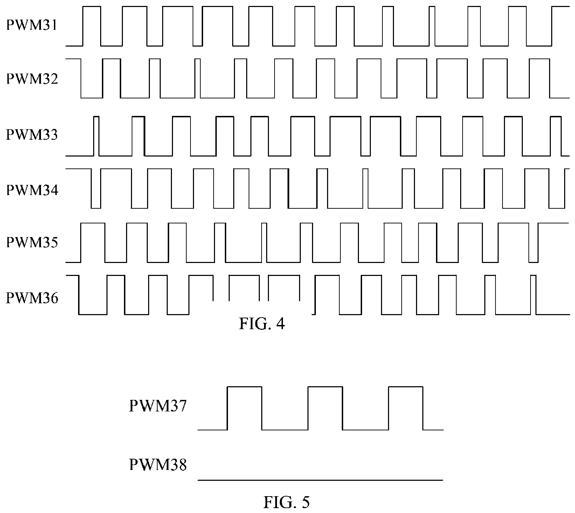

FIG. 4 is a waveform diagram of pulse width modulation signals provided to the first bridge arm to the third bridge arm in the multi-input power converter shown in FIG. 3. As shown in FIG. 4, the insulated gate bipolar transistors T31 and T32 are provided with complementary pulse width modulation signals PWM31 and PWM32, and the duty cycles of the pulse width modulation signals PWM31 and PWM32 vary according to the magnitude of the voltage of the first phase alternating current L1. The insulated gate bipolar transistors T33 and T34 are provided with complementary pulse width modulation signals PWM33 and PWM34, and the duty cycles of the pulse width modulation signals PWM33 and PWM34 vary according to the magnitude of the voltage of the second phase alternating current L2. The insulated gate bipolar transistors T35 and T36 are provided with complementary pulse width modulation signals PWM35 and PWM36, and the duty cycles of the pulse width modulation signals PWM35 and PWM36 vary according to the magnitude of the voltage of the third phase alternating current L3. The pulse width modulation signals PWM31 and PWM32 have a dead time therebetween, the pulse width modulation signals PWM33 and PWM34 have a dead time therebetween, and the pulse width modulation signals PWM35 and PWM36 have a dead time therebetween, to avoid short circuiting between the positive DC bus 391 and the negative DC bus 392.

FIG. 5 is a waveform diagram of a signal provided to a fourth bridge arm in the multi-input power converter shown in FIG. 3. As shown in FIG. 5, the insulated gate bipolar transistor T37 is provided with a pulse width modulation signal, and a gate of the insulated gate bipolar transistor T38 (i.e., its control end) is provided with a low level, that is, the insulated gate bipolar transistor T38 is controlled to be cut off.

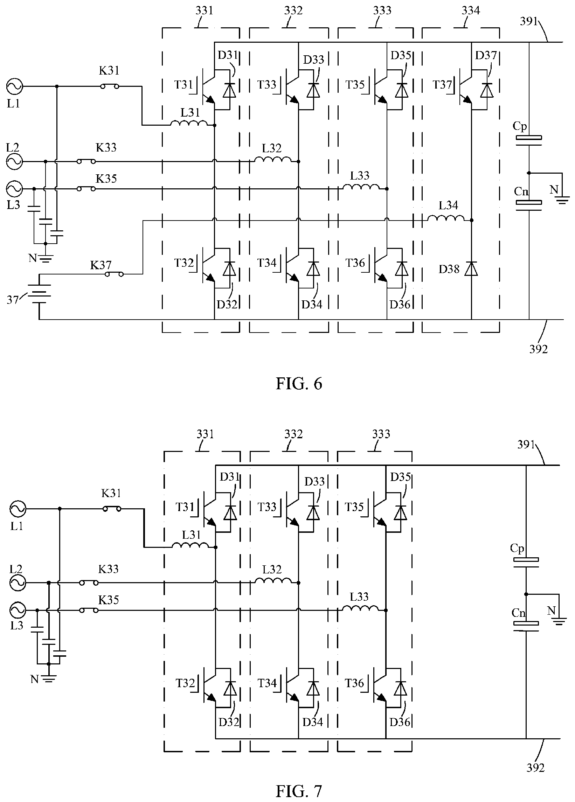

FIG. 6 is an equivalent circuit diagram of the multi-input power converter shown in FIG. 3 in a first operating mode. As shown in FIG. 6, the first bridge arm 331, the second bridge arm 332, and the third bridge arm 333 form a three phase bridge pulse width modulation rectifying circuit. By controlling the first bridge arm 331 to the third bridge arm 333 to operate in a pulse width modulation mode, the alternating currents in the three phase alternating currents L1, L2, and L3 are rectified and transmitted to the capacitor Cp and the capacitor Cn connected in series. The output currents and voltages of the three phase alternating currents L1, L2, and L3 are in phase, so that the power factor is approximately or equal to 1. Additionally, the insulated gate bipolar transistor T37, the diode D38, and the inductor L34 constitute a buck chopper circuit (or referred to as a buck circuit). A positive terminal and a negative terminal at an input end of the buck chopper circuit are connected to the positive DC bus 391 and the negative DC bus 392, respectively, and a positive terminal and a negative terminal at an output end thereof are connected to the positive and negative electrodes of the rechargeable battery 37, respectively. The buck circuit is used to charge the rechargeable battery 37 in a buck mode by using direct currents at two ends of the capacitor Cp and the capacitor Cn.

The multi-input power converter 30 of the present invention can transmit the alternating currents of the three phase alternating currents L1, L2, and L3 to the positive and negative DC buses 391 and 392 to supply power to a load, and can also use direct currents on the positive and negative DC buses 391 and 392 to charge the rechargeable battery 37.

### Second operating mode

When the three phase alternating currents L1, L2, and L3 are normal, and the rechargeable battery 37 is fully charged or does not need to be charged, the freewheeling switch K32 is controlled to be turned off, the AC switches K31, K33, and K35 are controlled to be turned on, the DC switch K37 is controlled to be turned on or off, and the DC switches K34 and K36 are controlled to be turned off.

Pulse width modulation signals provided to the insulated gate bipolar transistors T31, T32, T33, T34, T35, and T36 are the same as those shown in FIG. 4 and will not be repeated herein. At the same time, the insulated gate bipolar transistors T37 and T38 are controlled to be cut off.

FIG. 7 is an equivalent circuit diagram of the multi-input power converter shown in FIG. 3 in the second operating mode. The equivalent circuit shown in FIG. 7 forms a three phase bridge pulse width modulation rectifying circuit for rectifying the alternating currents in the three phase alternating currents L1, L2, and L3 and transmitting the rectified currents to the capacitors Cp and Cn connected in series.

The multi-input power converter 30 of the present invention can transmit the alternating currents of the three phase alternating currents L1, L2, and L3 to the positive and negative DC buses 391 and 392 to supply power to a load.

### Third operating mode

When the three phase alternating currents L1, L2, and L3 is abnormal or the power is out, and the rechargeable battery 37 has power, the freewheeling switch K32 is controlled to be turned on, the AC switches K31, K33, and K35 are controlled to be turned off, and the DC switches K34, K36, and K37 are controlled to be turned on.

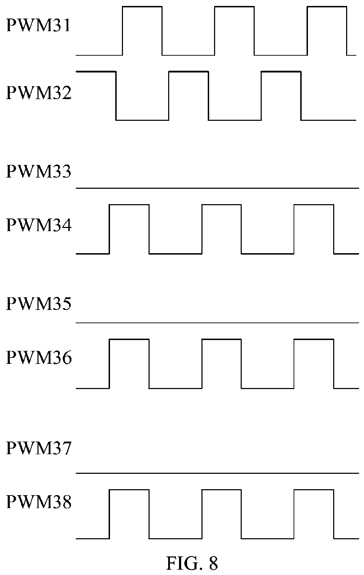

FIG. 8 is a waveform diagram of pulse width modulation signals provided to the first bridge arm to the fourth bridge arm in the multi-input power converter shown in FIG. 3. As shown in FIG. 8, the insulated gate bipolar transistors T31 and T32 are provided with complementary pulse width modulation signals PWM31 and PWM32, where the pulse width modulation signals PWM31 and PWM32 have a dead time therebetween to avoid short circuiting between the positive DC bus 391 and the negative DC bus 392. Gates of the insulated gate bipolar transistors T33, T35, and T37 (i.e., their control ends) are provided with low levels, that is, the insulated gate bipolar transistors T33, T35, and T37 are controlled to be cut off. At the same time, the insulated gate bipolar transistor T34, T36, and T38 are provided with pulse width modulation signals PWM34, PWM36, and PWM38.

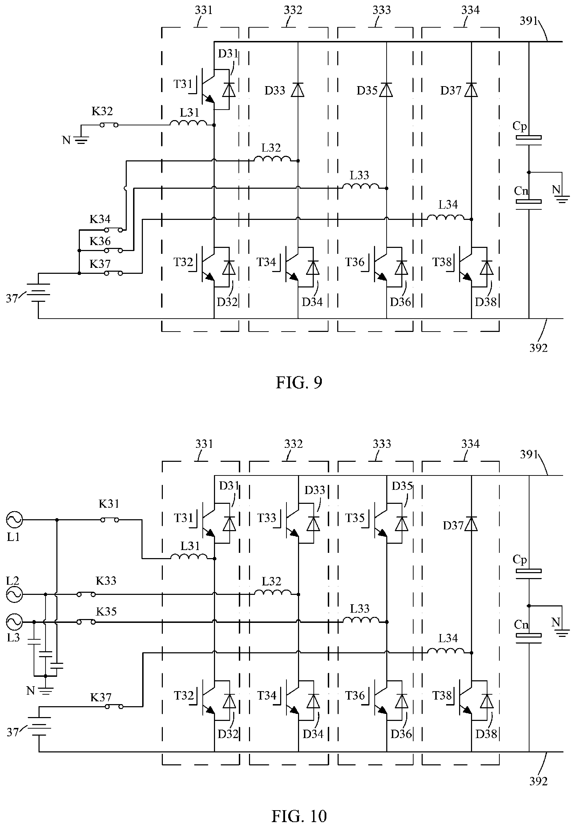

FIG. 9 is an equivalent circuit diagram of the multi-input power converter shown in FIG. 3 in the third operating mode. As shown in FIG. 9, the inductor L32, the insulated gate bipolar transistor T34, and the diode D33 form a boost chopper circuit (or referred to as a boost circuit); the inductor L33, the insulated gate bipolar transistor T36, and the diode D35 form a boost circuit; the inductor L34, the insulated gate bipolar transistor T38, and the diode D37 form a boost circuit. Positive and negative terminals at input ends of the three boost circuits are connected to the positive and negative electrodes of the rechargeable battery 37, respectively, and positive and negative terminals at output ends thereof are connected to the positive DC bus 391 and the negative DC bus 392, respectively. The three boost circuits simultaneously boost the direct current in the rechargeable battery 37 and then store the boosted direct current into the capacitor Cp and the capacitor Cn.

In the third operating mode, three bridge arms, the second bridge arm 332, the third bridge arm 333, and the fourth bridge arm 334, are used to charge the capacitor Cp and capacitor Cn between the positive DC bus 391 and the negative DC bus 392, and the output power is equal to the output power of the three phase alternating currents L1, L2, and L3. In this case, the total power of the multi-input power converter 30 is designed to be 1.33 times the output power, and electronic components with lower rated power can be selected without changing the output power, thereby reducing the costs of the electronic components.

If voltages across the capacitor Cp and the capacitor Cn are not equal, the insulated gate bipolar transistors T31 and T32 are controlled to be turned on alternately. When the insulated gate bipolar transistor T31 is turned on, a part of electric energy in the capacitor Cp is stored in the inductor L31; when the insulated gate bipolar transistor T32 is turned on, since the current in the inductor L31 cannot change suddenly, the energy in the inductor L31 is transferred to the capacitor Cn, and then a part of electric energy in the capacitor Cn is stored in the inductor L31; when the insulated gate bipolar transistor T31 is turned on, the energy in the inductor L31 is transferred to the capacitor Cp, and then the electric energy in the capacitor Cp is stored in the inductor L31. In this way, the voltages across the capacitor Cp and the capacitor Cn are equal.

### Fourth operating mode

When the load becomes large or overloaded, or in a process of transition from a battery mode to a mains mode, the freewheeling switch K32 is controlled to be turned off, the AC switches K31, K33, and K35 are controlled to be turned on, the DC switches K34 and K36 are controlled to be turned off, and the DC switch K37 is controlled to be turned on.

Pulse width modulation signals provided to the insulated gate bipolar transistors T31, T32, T33, T34, T35, and T36 are the same as those shown in FIG. 4 and will not be repeated herein. Pulse width modulation signals provided to the insulated gate bipolar transistors T37 and T38 are the same as the pulse width modulation signals PWM37 and PWM38 in FIG. 8 and will not be repeated herein.

FIG. 10 is an equivalent circuit diagram of the multi-input power converter shown in FIG. 3 in a fourth operating mode. As shown in FIG. 10, by controlling the first bridge arm 331, the second bridge arm 332, and the third bridge arm 333 to operate in a pulse width modulation mode, the alternating currents in the three phase alternating currents L1, L2, and L3 are rectified and transmitted to the capacitor Cp and the capacitor Cn connected in series. At the same time, the fourth bridge arm 334 is controlled to operate in a pulse width modulation mode, so that the direct current in the rechargeable battery 37 is boosted and then stored in the capacitor Cp and the capacitor Cn.

When the load suddenly becomes large or overloaded, the fourth operating mode is adopted, which can provide higher output power in a shorter time to meet the needs of the load. In the process of transition from the battery mode to the mains mode, the rechargeable battery 37 and the three phase alternating currents L1, L2, and L3 are first controlled to supply power to the load at the same time, and then the rechargeable battery 37 is stopped from supplying power to the load, so as to realize soft power switching.

### Fifth operating mode

The freewheeling switch K32 is controlled to be turned off, the AC switches K31, K33, and K35 are controlled to be turned on, the DC switches K34 and K36 are controlled to be turned off, and the DC switch K37 is controlled to be turned on.

Pulse width modulation signals provided to the insulated gate bipolar transistors T31, T32, T33, T34, T35, and T36 are the same as those shown in FIG. 4 and will not be repeated herein. Pulse width modulation signals provided to the insulated gate bipolar transistors T37 and T38 are the same as the pulse width modulation signals PWM37 and PWM38 in FIG. 8 and will not be repeated herein.

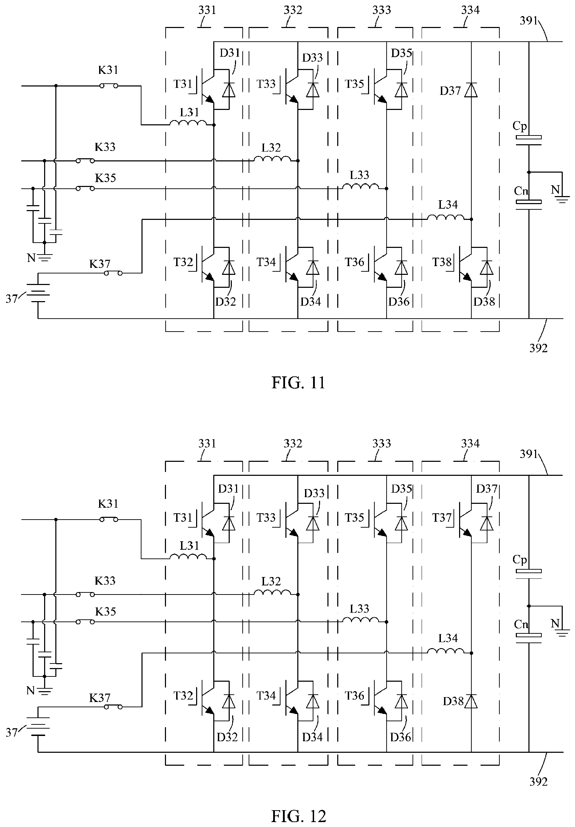

FIG. 11 is an equivalent circuit diagram of the multi-input power converter shown in FIG. 3 in a fifth operating mode. As shown in FIG. 11, by controlling the fourth bridge arm 334 to operate in a pulse width modulation mode, the direct current in the rechargeable battery 37 is boosted and then stored in the capacitor Cp and the capacitor Cn. At the same time, the first bridge arm 331, the second bridge arm 332, and the third bridge arm 333 are controlled to operate in a pulse width modulation mode to invert the direct current in the capacitor Cp and the capacitor Cn into an alternating current having a voltage slightly higher than a grid voltage, thereby realizing the incorporation of the direct current in the rechargeable battery 37 into the grid.

When power required by the load is small, the fifth operating mode is adopted, so that the rechargeable battery 37 is discharged at certain power in a short time. According to the change trend of the output voltage of the rechargeable battery 37 over time, the self-test of the rechargeable battery 37 is realized. Or, during a peak power consumption period, the direct current in the rechargeable battery 37 can be incorporated into the grid.

Those skilled in the art should understand that the fifth operating mode is not a main operating mode of the multi-input power converter 30, and it only shows herein that the multi-input power converter 30 can realize bidirectional transmission of energy and can fulfill functions such as self-test of the battery 37 and incorporation into the grid.

### Sixth operating mode

When the "load" can provide electric energy to the capacitor Cp and the capacitor Cn, the freewheeling switch K32 is controlled to be turned off, the AC switches K31, K33, and K35 are controlled to be turned on, the DC switches K34 and K36 are controlled to be turned off, and the DC switch K37 is controlled to be turned on.

Pulse width modulation signals provided to the insulated gate bipolar transistors T31, T32, T33, T34, T35, and T36 are the same as those shown in FIG. 4 and will not be repeated herein. Signals provided to the insulated gate bipolar transistors T37 and T38 are the same as those shown in FIG. 5 and will not be repeated herein.

FIG. 12 is an equivalent circuit diagram of the multi-input power converter shown in FIG. 3 in a sixth operating mode. As shown in FIG. 12, the insulated gate bipolar transistor T37 in the fourth bridge arm 334 is controlled to operate in a pulse width modulation mode, so that the direct current in the capacitor Cp and the capacitor Cn can charge the rechargeable battery 37 in a buck mode. At the same time, the first bridge arm 331, the second bridge arm 332, and the third bridge arm 333 are controlled to operate in a pulse width modulation mode to invert the direct current in the capacitor Cp and the capacitor Cn into an alternating current having a voltage slightly higher than the grid voltage, so as to incorporate into the grid.

The multi-input power converter of the present invention can also be electrically connected to the "load" that provides electric energy, and uses the electric energy provided by the "load" to charge the rechargeable battery 37, and incorporates the electric energy provided by the "load" into the grid.

### Seventh operating mode

When the "load" can provide electric energy to the capacitor Cp and the capacitor Cn, the freewheeling switch K32 is controlled to be turned off, the AC switches K31, K33, and K35 are controlled to be turned on, the DC switches K34 and K36 are controlled to be turned off, and the DC switch K37 is controlled to be turned on or turned off.

Pulse width modulation signals provided to the insulated gate bipolar transistors T31, T32, T33, T34, T35, and T36 are the same as those shown in FIG. 4 and will not be repeated herein. At the same time, the insulated gate bipolar transistors T37 and T38 are controlled to be cut off.

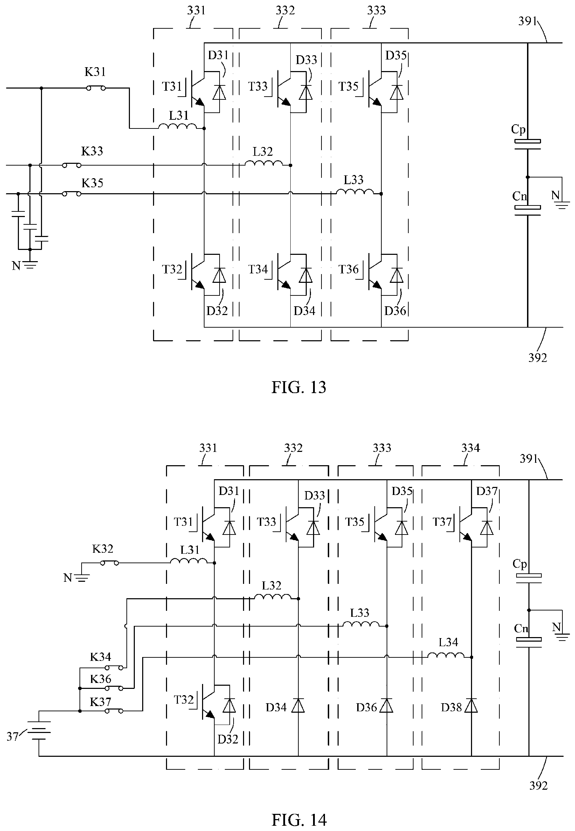

FIG. 13 is an equivalent circuit diagram of the multi-input power converter shown in FIG. 3 in a seventh operating mode. As shown in FIG. 13, in this case, the first bridge arm 331, the second bridge arm 332, and the third bridge arm 333 are controlled to operate in a pulse width modulation mode to invert the direct current in the capacitor Cp and the capacitor Cn into an alternating current having a voltage slightly higher than the grid voltage, so as to incorporate into the grid.

When the rechargeable battery 37 is fully charged, the multi-input power converter can be switched from the sixth operating mode to the seventh operating mode.

### Eighth operating mode

When the "load" can provide electric energy to the capacitor Cp and the capacitor Cn, the freewheeling switch K32 is controlled to be turned on, the AC switches K31, K33, and K35 are controlled to be turned off, and the DC switches K34, K36, and K37 are controlled to be turned on.

The insulated gate bipolar transistors T31 and T32 are provided with complementary pulse width modulation signals PWM31 and PWM32, where the pulse width modulation signals PWM31 and PWM32 have a dead time therebetween to avoid short circuiting between the positive DC bus 391 and the negative DC bus 392. The insulated gate bipolar transistors T33, T35, and T37 are provided with pulse width modulation signals so that they operate in a pulse width modulation mode, and the insulated gate bipolar transistors T34, T36, and T38 are provided with low levels, that is, the insulated gate bipolar transistors T34, T36, and T38 are controlled to be cut off.

FIG. 14 is an equivalent circuit diagram of the multi-input power converter shown in FIG. 3 in an eighth operating mode. As shown in FIG. 14, the insulated gate bipolar transistor T33, the inductor L32, and the diode D34 in the second bridge arm 332 form a buck circuit; the insulated gate bipolar transistor T35, the inductor L33, and the diode D36 in the third bridge arm 333 forms a buck circuit; the insulated gate bipolar transistor T37, the inductor L34, and the diode D38 in the fourth bridge arm 334 form a buck circuit; a positive terminal and a negative terminal at input ends of the three buck circuits are connected to the positive DC bus 391 and the negative DC bus 392, respectively, and a positive terminal and a negative terminal at output ends thereof are connected to the positive and negative electrodes of the rechargeable battery 37, respectively. By controlling the insulated gate bipolar transistors T33, T35, and T37 to operate in a pulse width modulation mode, the direct current in the capacitor Cp and the capacitor Cn is used to charge the rechargeable battery 37 in a buck mode. At the same time, the insulated gate bipolar transistors T31 and T32 in the first bridge arm 331 are controlled to be turned on alternately to make the voltages across the capacitor Cp and the capacitor Cn equal.

In summary, the multi-input power converter 30 of the present invention has a plurality of operating modes, which can adapt to different operating conditions.

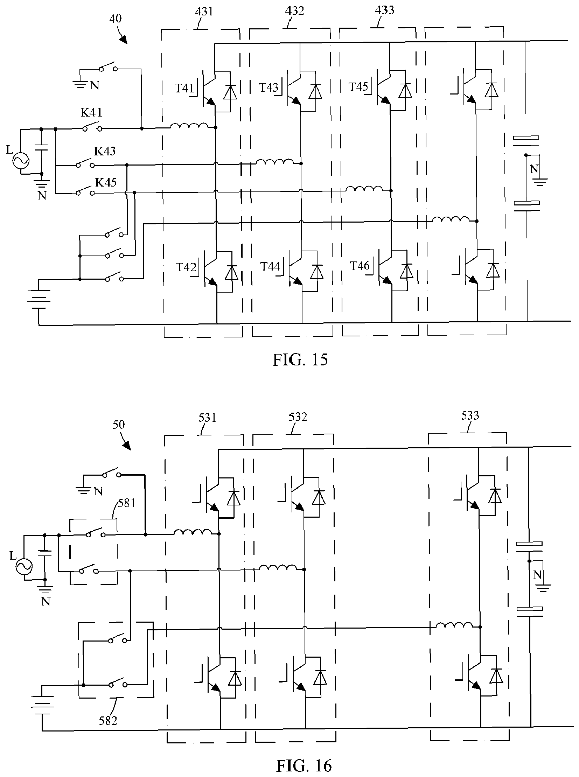

FIG. 15 is a circuit diagram of a multi-input power converter connected to alternating currents and a rechargeable battery according to a second embodiment of the present invention. As shown in FIG. 15, the multi-input power converter 40 is basically the same as the multi-input power converter 30 shown in FIG. 3, except that one ends of AC switches K41, K43, and K45 are connected to input ends of a first bridge arm 431, a second bridge arm 432, and a third bridge arm 433, respectively, and the other ends thereof are connected to a single phase AC supply L. The operating mode is the same as the operating mode of the multi-input power converter 30 shown in FIG. 3, and will not be repeated herein.

As shown in FIG. 15, the multi-input power converter 40 controls the first bridge arm 431, the second bridge arm 432, and the third bridge arm 433 to operate in a interleaving parallel mode in a process of converting an alternating current in the single phase AC supply L into a direct current. Specifically, insulated gate bipolar transistors T41 and T42 in the first bridge arm 431 are provided with two complementary pulse width modulation signals PWM41 and PWM42 having a dead time, insulated gate bipolar transistors T43 and T44 in the second bridge arm 432 are provided with two complementary pulse width modulation signals PWM43 and PWM44 having a dead time, and insulated gate bipolar transistors T45 and T46 in the third bridge arm 433 are provided with two complementary pulse width modulation signals PWM45 and PWM46 having a dead time, where the pulse width modulation signal PWM43 is delayed by 1/3 of the pulse width modulation signal period than the pulse width modulation signal PWM41, and the pulse width modulation signal PWM45 is delayed by 2/3 of the pulse width modulation signal period than the pulse width modulation signal PWM41. This can reduce a ripple current, so that a filter capacitor connected between the alternating currents and a center line can be selected to have a smaller capacitance value.

FIG. 16 is a circuit diagram of a multi-input power converter connected to alternating currents and a rechargeable battery according to a third embodiment of the present invention. As shown in FIG. 16, the multi-input power converter is basically the same as that shown in FIG. 15, except that the multi-input power converter 50 includes a first bridge arm 531, a second bridge arm 532, and a third bridge arm 533; an AC switch assembly 581 is connected between alternating current L and input ends of the first bridge arm 531 and the second bridge arm 532; and a DC switch assembly 582 is connected between a positive electrode of the rechargeable battery and input ends of the second bridge arm 532 and the third bridge arm 533.

The operating mode of the multi-input power converter 50 in FIG. 16 is similar to the operating mode of the multi-input power converter 40 shown in FIG. 15, and will not be repeated herein. Based on its operating mode, it can be known that the total power of the multi-input power converter 50 is 1.5 times the output power. Electronic components with smaller rated power can be selected without changing the output power, thereby saving the costs of the electronic components.

In other embodiments of the present invention, a multi-input power converter includes: n bridge arms connected in parallel between a positive DC bus and a negative DC bus, where n is a positive integer not less than 3; an AC switch assembly connected between alternating currents and input ends of the first to n-1^{th} bridge arms; a DC switch assembly connected between a positive electrode of a rechargeable battery and input ends of the second to n^{th} bridge arms; and a capacitor assembly connected between the positive DC bus and the negative DC bus, where the capacitor assembly can be in the form of a single capacitor or a plurality of capacitors in serial/parallel connection.

In the multi-input power converter of the present invention, the number of bridge arms is selected according to actual applications, preferably four, and the alternating currents is preferably three phase alternating currents.

In the control method of the present invention described above, the present invention does not intend to limit the duty cycle of the pulse width modulation signal provided to the boost circuit or buck circuit in the equivalent circuits, but intend to adjust or change the duty cycle of the pulse width modulation signal according to the relationship between the voltages on the positive and negative DC buses and the voltage of the rechargeable battery.

In other embodiments of the present invention, a switch transistor such as a gate-turn-off thyristor or a metal oxide semi-field effect transistor can be used instead of an insulated gate bipolar transistor.

The AC switches K31, K33, and K35 in the AC switch assembly of the present invention are turned on or off at the same time; therefore, a three phase switch device can also be used to replace the AC switches K31, K33, and K35 in the above embodiments. The DC switches K34 and K36 in the DC switch assembly are turned on or off at the same time; therefore, a double-pole single-throw switch device can be used to replace the DC switches K34 and K36. The switch in the foregoing embodiments of the present invention may be a mechanical contact switch or an electronic controllable switch.

When capacitors Cp and Cn with larger capacitance values are selected, in the third operating mode and the eighth operating mode, there is no need to balance the voltage values across the capacitor Cp and the capacitor Cn. Therefore, in other embodiments of the present invention, the freewheeling switch K32 can be omitted.

The present invention further provides an uninterruptible power supply, which includes the aforementioned multi-input power converter; a rechargeable battery with a negative electrode connected to a negative DC bus; and an inverter, where a positive terminal and a negative terminal at an input end of the inverter are connected to positive and negative DC buses, respectively, and an output end thereof is used to provide a required alternating current to a load. According to actual needs, capacitors can be connected in parallel at both ends of the rechargeable battery, and filter capacitors can be connected in parallel between each phase of alternating current of the three phase alternating currents and the neutral point N.

Although the present invention has been described through preferred embodiments, the present invention is not limited to the embodiments described herein, but includes various changes and variations made without departing from the scope of the present invention.

## Claims

1. A multi-input power converter, comprising:
n bridge arms connected in parallel between a positive direct current (DC) bus and a negative DC bus, where n is a positive integer not less than 3;
a capacitor assembly connected between the positive DC bus and the negative DC bus;
an alternating current (AC) switch assembly connected between input ends of a first bridge arm to an n-1^{th} bridge arm and alternating currents; and
a DC switch assembly connected between input ends of the second bridge arm to the n^{th} bridge arm and a positive electrode of a rechargeable battery.

2. The multi-input power converter according to claim 1, wherein the capacitor assembly comprises a first capacitor and a second capacitor connected in series between the positive DC bus and the negative DC bus.

3. The multi-input power converter according to claim 2, wherein the multi-input power converter comprises a freewheeling switch, one end of the freewheeling switch is connected to the input end of the first bridge arm, and the other end thereof is connected to a node at which the first capacitor and the second capacitor are connected.

4. The multi-input power converter according to claim 1, wherein the alternating currents are three phase alternating currents, the n bridge arms comprise a first bridge arm, a second bridge arm, a third bridge arm, and a fourth bridge arm, and the AC switch assembly comprises:
an AC switch connected between a first phase alternating current of the three phase alternating currents and the input end of the first bridge arm;
an AC switch connected between a second phase alternating current of the three phase alternating currents and the input end of the second bridge arm; and
an AC switch connected between a third phase alternating current of the three phase alternating currents and the input end of the third bridge arm.

5. The multi-input power converter according to claim 4, wherein the DC switch assembly comprises:
a DC switch connected between the input end of the second bridge arm and the positive electrode of the rechargeable battery;
a DC switch connected between the input end of the third bridge arm and the positive electrode of the rechargeable battery; and
a DC switch connected between the input end of the fourth bridge arm and the positive electrode of the rechargeable battery.

6. The multi-input power converter according to any one of claims 1 to 5, wherein each of the n bridge arms comprises:
a first switch transistor and a first diode in anti-parallel connection thereto;
a second switch transistor and a second diode in anti-parallel connection thereto; and
an inductor;
wherein the first switch transistor and the second switch transistor are connected in series between the positive DC bus and the negative DC bus, one end of the inductor is connected to a node at which the first switch transistor and the second switch transistor are connected, and the other end of the inductor is used as the input end.

7. The multi-input power converter according to claim 6, wherein the first switch transistor is a first insulated gate bipolar transistor, the second switch transistor is a second insulated gate bipolar transistor, and a node at which an emitter of the first insulated gate bipolar transistor and a collector of the second insulated gate bipolar transistor are connected is connected to one end of the inductor.

8. The multi-input power converter according to claim 1, wherein the multi-input power converter further comprises a control device configured to:
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the first bridge arm to the n-1^{th} bridge arm to operate in a pulse width modulation mode so that the alternating current is converted into a direct current and transmitted to the positive DC bus and the negative DC bus, and control the n^{th} bridge arm to operate in a pulse width modulation mode so as to charge the rechargeable battery in a buck mode; or
control the AC switch assembly and the DC switch assembly so that the input ends of the first bridge arm to the n-1^{th} bridge arm are connected to the alternating currents, control the first bridge arm to the n-1^{th} bridge arm to operate in a pulse width modulation mode so that the alternating current is converted into a direct current and transmitted to the positive DC bus and the negative DC bus, and control the n^{th} bridge arm to stop operating; or
control the AC switch assembly and the DC switch assembly so that the input ends of the second bridge arm to the n^{th} bridge arm are connected to the positive electrode of the rechargeable battery, and control the second bridge arm to the n^{th} bridge arm to operate in a pulse width modulation mode so that the direct current in the rechargeable battery is boosted and then transmitted to the positive DC bus and the negative DC bus; or
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the first bridge arm to the n-1^{th} bridge arm to operate in a pulse width modulation mode so that the alternating current is converted into a direct current and transmitted to the positive DC bus and the negative DC bus, and control the n^{th} bridge arm to operate in a pulse width modulation mode so that the direct current in the rechargeable battery is boosted and transmitted to the positive DC bus and the negative DC bus; or
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the n^{th} bridge arm to operate in a pulse width modulation mode so that the direct current in the rechargeable battery is boosted and then transmitted to the positive DC bus and the negative DC bus, and control the first bridge arm to the n-1^{th} bridge arm to operate in a pulse width modulation mode so that the direct current in the positive DC bus and the negative DC bus is inverted into an alternating current; or
control the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, control the first bridge arm to the n-1^{th} bridge arm to operate in a pulse width modulation mode so that the direct current in the positive DC bus and the negative DC bus is inverted into an alternating current, and control the n^{th} bridge arm to operate in a pulse width modulation mode so as to charge the rechargeable battery in a buck mode; or
control the AC switch assembly and the DC switch assembly so that the input ends of the first bridge arm to the n-1^{th} bridge arm are connected to the alternating currents, control the first bridge arm to the n-1^{th} bridge arm to operate in a pulse width modulation mode so that the direct current in the positive DC bus and the negative DC bus is inverted into an alternating current, and control the n^{th} bridge arm to stop operating; or
control the AC switch assembly and the DC switch assembly so that the input ends of the second bridge arm to the n^{th} bridge arm are connected to the positive electrode of the rechargeable battery, and control the second bridge arm to the n^{th} bridge arm to operate in a pulse width modulation mode so as to charge the rechargeable battery in a buck mode.

9. The multi-input power converter according to claim 8, wherein the capacitor assembly comprises a first capacitor and a second capacitor connected in series between the positive DC bus and the negative DC bus, the multi-input power converter comprises a freewheeling switch, one end of the freewheeling switch is connected to the input end of the first bridge arm, and the other end thereof is connected to a node at which the first capacitor and the second capacitor are connected; the control device is used to control the freewheeling switch to be turned on when the input ends of the second bridge arm to the n^{th} bridge arm are controlled to be connected to the positive electrode of the rechargeable battery, and control the freewheeling switch to be turned off when the input ends of the first bridge arm to the n-1^{th} bridge arm are controlled to be connected to the alternating currents.

10. A control method for the multi-input power converter according to claim 1, comprising:
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the first bridge arm to the n-1^{th} bridge arm to operate in a pulse width modulation mode so that the alternating current is converted into a direct current and transmitted to the positive DC bus and the negative DC bus, and controlling the n^{th} bridge arm to operate in a pulse width modulation mode so as to charge the rechargeable battery in a buck mode; or
controlling the AC switch assembly and the DC switch assembly so that the input ends of the first bridge arm to the n-1^{th} bridge arm are connected to the alternating currents, controlling the first bridge arm to the n-1^{th} bridge arm to operate in a pulse width modulation mode so that the alternating current is converted into a direct current and transmitted to the positive DC bus and the negative DC bus, and controlling the n^{th} bridge arm to stop operating; or
controlling the AC switch assembly and the DC switch assembly so that the input ends of the second bridge arm to the n^{th} bridge arm are connected to the positive electrode of the rechargeable battery, and controlling the second bridge arm to the n^{th} bridge arm to operate in a pulse width modulation mode so that the direct current in the rechargeable battery is boosted and then transmitted to the positive DC bus and the negative DC bus; or
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the first bridge arm to the n-1^{th} bridge arm to operate in a pulse width modulation mode so that the alternating current is converted into a direct current and transmitted to the positive DC bus and the negative DC bus, and controlling the n^{th} bridge arm to operate in a pulse width modulation mode so that the direct current in the rechargeable battery is boosted and transmitted to the positive DC bus and the negative DC bus; or
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the n^{th} bridge arm to operate in a pulse width modulation mode so that the direct current in the rechargeable battery is boosted and then transmitted to the positive DC bus and the negative DC bus, and controlling the first bridge arm to the n-1^{th} bridge arm to operate in a pulse width modulation mode so that the direct current in the positive DC bus and the negative DC bus is inverted into an alternating current; or
controlling the AC switch assembly and the DC switch assembly so that the input ends of the first bridge arm to the n-1^{th} bridge arm are connected to the alternating currents and the input end of the n^{th} bridge arm is connected to the positive electrode of the rechargeable battery, controlling the first bridge arm to the n-1^{th} bridge arm to operate in a pulse width modulation mode so that the direct current in the positive DC bus and the negative DC bus is inverted into an alternating current, and controlling the n^{th} bridge arm to operate in a pulse width modulation mode so as to charge the rechargeable battery in a buck mode; or
controlling the AC switch assembly and the DC switch assembly so that the input ends of the first bridge arm to the n-1^{th} bridge arm are connected to the alternating currents, controlling the first bridge arm to the n-1^{th} bridge arm to operate in a pulse width modulation mode so that the direct current in the positive DC bus and the negative DC bus is inverted into an alternating current, and controlling the n^{th} bridge arm to stop operating; or
controlling the AC switch assembly and the DC switch assembly so that the input ends of the second bridge arm to the n^{th} bridge arm are connected to the positive electrode of the rechargeable battery, and controlling the second bridge arm to the n^{th} bridge arm to operate in a pulse width modulation mode so as to charge the rechargeable battery in a buck mode.

11. The control method according to claim 10, wherein the capacitor assembly comprises a first capacitor and a second capacitor connected in series between the positive DC bus and the negative DC bus, the multi-input power converter comprises a freewheeling switch, one end of the freewheeling switch is connected to the input end of the first bridge arm, and the other end thereof is connected to a node at which the first capacitor and the second capacitor are connected; the control method comprises controlling the freewheeling switch to be turned on when the input ends of the second bridge arm to the n^{th} bridge arm are controlled to be connected to the positive electrode of the rechargeable battery, and controlling the freewheeling switch to be turned off when the input ends of the first bridge arm to the n-1^{th} bridge arm are controlled to be connected to the alternating currents.

12. The control method according to claim 10 or 11, wherein each of the n bridge arms comprises: a first switch transistor and a first diode in anti-parallel connection thereto; a second switch transistor and a second diode in anti-parallel connection thereto; and an inductor; wherein the first switch transistor and the second switch transistor are connected in series between the positive DC bus and the negative DC bus, one end of the inductor is connected to a node at which the first switch transistor and the second switch transistor are connected, and the other end of the inductor is used as an input end;
wherein the controlling the first bridge arm to the n-1^{th} bridge arm to operate in a pulse width modulation mode so that the alternating current is converted into a direct current comprises: providing the first switch transistor and the second switch transistor in each of the first bridge arm to the n-1^{th} bridge arm with two complementary pulse width modulation signals of which duty cycles vary according to the magnitude of the voltage of the corresponding alternating current;
the controlling the n^{th} bridge arm to operate in a pulse width modulation mode so as to charge the rechargeable battery in a buck mode comprises: controlling the second switch transistor in the n^{th} bridge arm to be cut off, and providing the first switch transistor in the n^{th} bridge arm with a pulse width modulation signal; and
the controlling the second bridge arm to the n^{th} bridge arm to operate in a pulse width modulation mode so that the direct current in the rechargeable battery is boosted and then transmitted to the positive DC bus and the negative DC bus comprises: controlling the first switch transistor in each of the second bridge arm to the n^{th} bridge arm to be cut off, and providing the second switch transistor in each of the second bridge arm to the n^{th} bridge arm with a pulse width modulation signal.

13. An uninterruptible power supply, comprising:
the multi-input power converter according to any one of claims 1 to 9;
a rechargeable battery, having a negative electrode connected to a negative DC bus; and
an inverter, having an input end at which a positive terminal and a negative terminal are connected to the positive DC bus and the negative DC bus respectively, and an output end connected to an AC output end.
